(19) Europäisches Patentamt
European Patent Office
Office européen des brevets

(11) **EP 1 281 249 B1**

(12) **EUROPEAN PATENT SPECIFICATION**

(45) Date of publication and mention
of the grant of the patent:
**21.01.2009 Bulletin 2009/04**

(51) Int Cl.:
***H04B 7/26*** (2006.01)

(21) Application number: **01935213.7**

(86) International application number:
**PCT/US2001/014994**

(22) Date of filing: **08.05.2001**

(87) International publication number:
**WO 2001/086837 (15.11.2001 Gazette 2001/46)**

(54) **A METHOD AND AN APPARATUS FOR PROVIDING BOTH VOICE AND DATA SERVICES IN A WIRELESS COMMUNICATION SYSTEM**

VERFAHREN UND GERÄT ZUR BEREITSTELLUNG VON SPRACH- UND DATEMKOMMUNIKATION IN EINEM DRAHTLOSEN KOMMUNIKATIONSSYSTEM

PROCEDE ET APPAREIL PERMETTANT LA MISE EN OEUVRE DE SERVICES VOCAUX ET DE SERVICES DE DONNEES DANS UN SYSTEME DE COMMUNICATION SANS FIL A HAUT DEBIT

(84) Designated Contracting States:
**AT BE CH CY DE DK ES FI FR GB GR IE IT LI LU MC NL PT SE TR**

(30) Priority: **09.05.2000 US 567819**

(43) Date of publication of application:
**05.02.2003 Bulletin 2003/06**

(73) Proprietor: **QUALCOMM INCORPORATED**
**San Diego, CA 92121-1714 (US)**

(72) Inventors:
• **WHEATLEY, Charles, E., III**
**Del Mar, CA 92014 (US)**
• **BENDER, Paul, E.**
**San Diego, CA 92122 (US)**

(74) Representative: **Walsh, Michael Joseph et al**
**TOMKINS & CO.**
**5, Dartmouth Road**
**Dublin 6 (IE)**

(56) References cited:
**EP-A- 0 538 546          WO-A-00/13446**
**US-A- 4 052 565**

• **GANGSHENG WANG ET AL: "SEARCHING FOR OPTIMAL FRAME PATTERNS IN AN INTEGRATED TDMA COMMUNICATION SYSTEM USING MEAN FIELD ANNEALING" IEEE TRANSACTIONS ON NEURAL NETWORKS, IEEE INC, NEW YORK, US, vol. 9, no. 6, 1 November 1998 (1998-11-01), pages 1292-1299, XP000788886 ISSN: 1045-9227**

**Description**

**BACKGROUND OF THE INVENTION**

**I. Field of the Invention**

The current invention relates to communications. More particularly, the present invention relates to a novel method and apparatus for providing both voice services and data services in a High Data Rate (HDR) wireless communication system.

**II. Description of the Related Art**

A modem communications system is required to support a variety of applications. One such communications system is disclosed in European Patent Application Publication number 0538546, entitled Method and apparatus for controlling a TDM Communication Device, which describes a Time Division Multiplex system configured for vocoding speech at different rates in different time-slots. Another such communications system is a code division multiple access (CDMA) system that conforms to the "TIAIEIA/IS-95 Mobile Station-Base Station Compatibility Standard for Dual-Mode Wide-Band Spread Spectrum Cellular System," hereinafter referred to as the IS-95 standard. The CDMA system supports voice and data communication between users over a terrestrial link. The use of CDMA techniques in a multiple access communication system is disclosed in U.S. Patent No. 4,901,307, entitled "SPREAD SPECTRUM MULTIPLE ACCESS COMMUNICATION SYSTEM USING SATELLITE OR TERRESTRIAL REPEATERS," and U.S. Patent No. 5,103,459, Publication Number US005103459 entitled "SYSTEM AND METHOD FOR GENERATING WAVEFORMS IN A CDMA CELLULAR TELEPHONE SYSTEM," both assigned to the assignee of the present invention.

In a CDMA system, communications between users are conducted through one or more base stations. In wireless communication systems, forward link refers to the channel through which signals travel from a base station to a subscriber station, and reverse link refers to channel through which signals travel from a subscriber station to a base station. By transmitting data on a reverse link to a base station, a first user on one subscriber station may communicate with a second user on a second subscriber station. The base station receives the data from the first subscriber station and routes the data to a base station serving the second subscriber station. Depending on the location of the subscriber stations, both may be served by a single base station or multiple base stations. In any case, the base station serving the subscriber stations sends the data on the forward link. Instead of communicating with a second user on a subscriber station, a first subscriber station may also communicate with a second user on wireline telephone. The second user is connected to the wireless communication systems through a public switched telephone network (PSTN), or a terrestrial Internet through a connection with a serving base station.

Given the growing demand for wireless data applications, the need for very efficient wireless data communication systems has become increasingly significant. The IS-95 series of standard, e.g., IS-95A, IS-95B, as well as a proposal issued by the Telecommunications Industry Association entitled "The cdma2000 ITU-R RTT Candidate Submission," which is being developed as TIA/EIA/IS-2000, specify transmitting traffic data and voice data over the forward and reverse links. A method for transmitting traffic data in code channel frames of fixed size is described in detail in U.S. Patent No. 5,504,773, Publication Number US005504773 entitled "METHOD AND APPARATUS FOR THE FORMATTING OF DATA FOR TRANSMISSION", assigned to the assignee of the present invention. In accordance with the IS-95 standard, the traffic data or voice data is partitioned into code channel frames that are 20 milliseconds wide with data rates as high as 8x14.4 KBPS.

In mobile radio communication systems, there are significant differences between the requirements for providing voice and data services (i.e., non-voice services such as Internet or fax transmissions). Unlike data services, voice services require stringent and fixed delays between speech frames. Typically, the overall one-way delay of speech frames used for transmitting voice information must be less than 100 msec. By contrast, transmission delays that occur during data (i.e., non-voice information) services can vary and larger delays then those that can be tolerated for voice services can be utilized.

Another significant difference between voice and data services is that, in contrast to data services, voice services require a fixed and common grade of service. Typically, for digital systems providing voice services, this requirement is met by using a fixed and equal transmission rate for all users and a maximum tolerable error rate for speech frames. For data services, the grade of service can vary from user to user.

Yet another difference between voice services and data services is that voice services require a reliable communication link when a subscriber station transitions between base stations, which, in the case of a CDMA communication system, is provided using a soft handoff. A soft handoff requires the redundant transmission of the same voice information from two or more base stations to improve reliability. A soft handoff method is disclosed in U.S. Patent No. 5,101,501, Publication Number US005101501 entitled " Method and system for providing, SOFT HANDOFF IN COMMUNICATIONS IN A CDMA CELLULAR TELEPHONE SYSTEM." This additional reliability is not required to support data services, because data packets received in error can be retransmitted. The retransmission is carried out from one base station only, thus resources are conserved.

As a mobile station moves about a mobile radio communication system, the quality of the forward and reverse links (and the capacity of the forward and reverse links to transmit data) will vary. Thus, at some moments a given forward and reverse links between a base station and a mobile station will be able to support a very high data transmission and, at other moments, the same forward and reverse links may only be able to support a much reduced data transmission rate. In order to maximize the throughput of information on the forward link, it would be desirable if the transmission of data on the forward link could be varied so as to increase the data rate during those intervals where the forward link can support a higher transmission rate.

When non-voice traffic is being sent from a base station to a mobile station on a forward link, it may be necessary to send control information from the mobile station to the base station. At times, however, even though the forward link signal may be strong, the reverse link signal may be weak, thereby resulting in a situation where the base station cannot receive control information from the mobile station. In such situations, where the forward link and the reverse link are unbalanced, it may be undesirable to increase the transmit power on the reverse link in order to improve the reception quality of the control information at the base station. For example, in CDMA systems, increasing the transmit power on the reverse link would be undesirable, as such a power increase could adversely affect the reverse link capacity seen by other mobile stations in the system. It would be desirable to have a data transmission system where the forward and reverse links associated with each mobile station were maintained in a balanced state without adversely impacting the reverse link capacity. It would be further desirable if such a system could maximize the throughput of non-voice data on individual forward links when such links are sufficiently strong to support higher data rates.

One approach to the aforementioned requirements in HDR systems for the forward link is to keep the transmit power fixed and vary the data rate depending on the users' channel conditions. Consequently, in a modem HDR system, Access Point(s) (APs) always transmit at maximum power to only one Access Terminal (AT) in each time slot, and the AP uses rate control to adjust the maximum rate that the AT can reliably receive. AP is a network equipment providing connectivity between a packet switched data network (e.g., the Internet) and an AT. AT is a device providing data connectivity to a user. Reliability of reception is measured by a quality metric, e.g., a packet error rate (PER). An exemplary HDR system defines a set of data rates, ranging from 38.4kbps to 2.4576 Mbps, at which the AP may send data packets to the AT over a forward link.

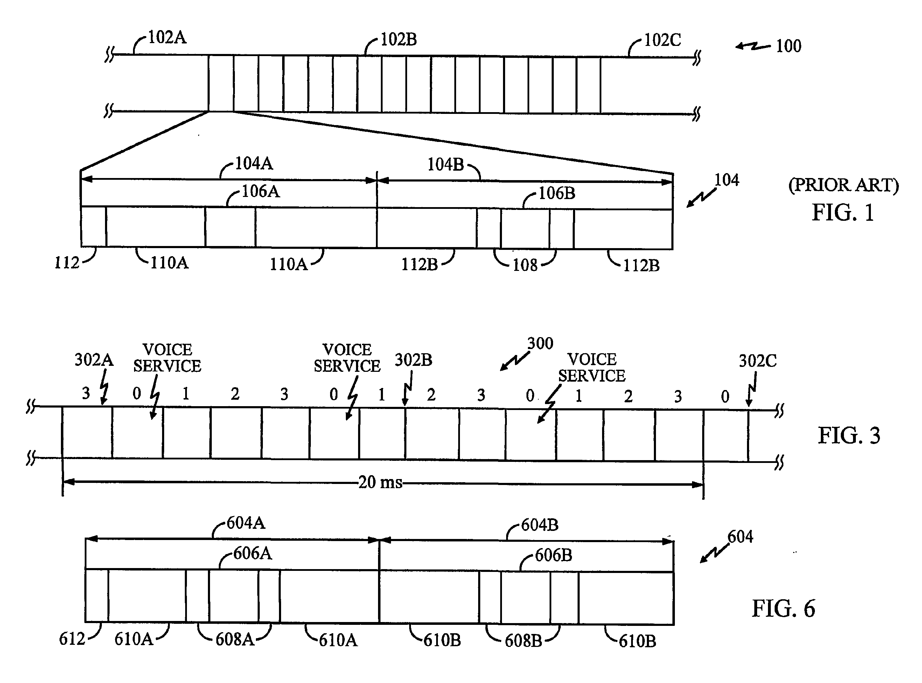

FIG. 1 shows a forward link 100 of an exemplary HDR system. The forward link 100 is defined in terms of frames 102. (Only frames 102a, 102b, 102c are shown in FIG.1.) In an exemplary embodiment, a frame comprises 16 time slots, each time slot being 2048 chips long, corresponding to a 1.67 millisecond slot duration, and, consequently, a 26.67 ms frame duration. Each slot 104 is divided into two half-slots 104a, 104b, with a pilot bursts 106a, 106b transmitted within each half-slot 104a, 104b. In an exemplary embodiment, each pilot burst 106a, 106b is 96 chips long, and is centered at the midpoint of its associated half-slot 104a, 104b. A forward medium access channel (MAC) 108 is transmitted in every second half-slot 104b. In an exemplary embodiment, the MAC is composed of up to 31 code channels, which are orthogonally covered by 32-ary Walsh codes. Each code channel is identified by a MAC index, which has a value between 1 and 31, and identifies a unique 32-ary Walsh cover. The Walsh cover with index 0 is reserved for a pilot channel. The MAC symbol Walsh covers are repeated 4 times per time slot to form two bursts of length 64 chips each, which are transmitted immediately before and immediately after the second pilot burst 106b of each slot 104. A reverse power control channel (RPC) is used to regulate the power of the reverse link signals for each subscriber station. The RPC is assigned to one of the available MAC with MAC index greater than 1. The MAC with MAC index 1 is used for a forward activity channel (FA), which indicates to the AT whether or not the traffic channel of the associated pilot will be transmitting during the frame following the next frame. The forward link traffic channel payload is sent in the remaining portions of the first half-slot 110a and the second half-slot 110b. The payload is serial-concatenated coded in blocks of fixed size, called encoder packets. When a packet is a multi slot packet, a preamble 112 is sent in the first slot.

As the aforementioned description of the forward link indicates, the exemplary HDR system has been designed for communication of data services only. However, requirements for data services and voice services in certain localities may not justify deployment of a full-fledged data system in addition to a voice system. Furthermore, transition from all voice system to an all data system is aided by the ability to share resources for the transition period. Therefore, there exists a need in the art for an HDR communication system that provides both voice services and data services.

## SUMMARY OF THE INVENTION

The present invention is directed to a novel method and apparatus for providing both voice services and data services in a High Data Rate (HDR) wireless communication system. In accordance with the present invention, the forward link is formally divided into frames comprising number of time slots. At least one sub-channel is formed to comprise at least one time slot that occupies a specified position in the frame. The at least one sub-channel is assigned completely to voice services.

In accordance with one aspect of the invention, remaining time slots are assigned completely to data services.

In accordance with another aspect of the invention, additional sub-channels are formed, utilizing all remaining time slots. The additional sub-channels are assigned to data services, such that each sub-channel carries data to a different user.

In accordance with another aspect of the invention, the number of sub-channels assigned to voice services, and the number of sub-channels assigned to voice services changes with varying needs for voice services and data services. Consequently, if only voice services and no data services are desired, all sub-channels are assigned to voice services, and no sub-channels are assigned to data services, and *vice versa.*

## BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:

> **FIG.1** illustrates a forward link structure of an exemplary prior art HDR system.
> **FIG. 2** illustrates an exemplary communication system capable of implementing embodiments of the invention.
> **FIG. 3** illustrates a forward link in accordance with one embodiment of the present invention.
> **FIG. 4** illustrates an adaptive transmission control.
> **FIG. 5** illustrates a voice services time slot and data services time slot of a forward link in accordance with one embodiment of the present invention.
> **FIG. 6** illustrates a time slot in accordance with one embodiment of the present invention.

## DETAILED DESCRIPTION OF PREFERRED EMBODIMENTS

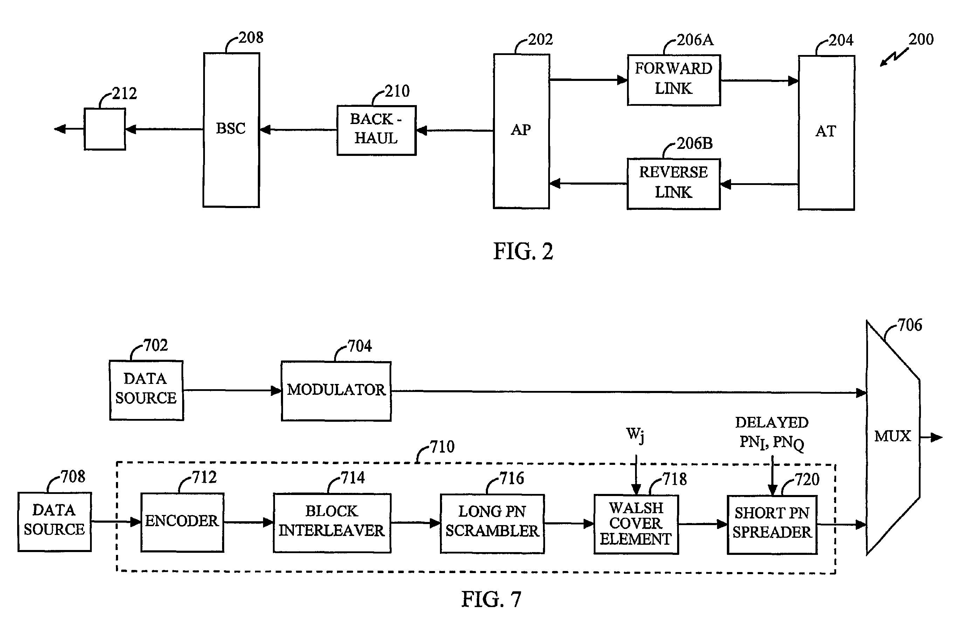

**FIG. 2** illustrates an exemplary communication system **200** capable of implementing embodiments of the invention. An AP **202** transmits signals to an AT **204** over a forward link **206a,** and receives signals from the AT **204** over a reverse link **206b.** The communication system **200** can be operated bi-directionally, each of the terminals **202, 204** operating as a transmitter unit or a receiver unit, or both concurrently, depending on whether data is being transmitted from, or received at, the respective terminal **202, 204.** In a cellular wireless communication system embodiment, the AP **204** can be a base station (BS) and the AT **202** can be a mobile station (MS). The forward link **206a** may be any embodiment of a forward link in accordance with the present invention. The reverse link **206b** may be a reverse link in accordance with existing HDR systems, a reverse link in accordance with IS-95 or IS-2000 standards, or any embodiment of a reverse link capable of supporting forward link of HDR system. For simplicity, communication system **200** is shown to include one BS **204** and one MS **202** only. However, other variations and configurations of the communication system **200** are possible. For example, in a multi-user, multiple access communication system, single BS may simultaneously support voice services and data services to a number of MSs. As further discussed below, when receiving voice services, an MS may concurrently receive transmissions from a number of BSs, in a manner similar to soft-handoff, disclosed in aforementioned U.S. Patent No. 5,101,501. In contrast, when receiving data services, an MS receives transmissions from single BS. The communication system of the embodiments described herein may include any number of BSs and MSs. Consequently, each of the multiple BSs is connected to a base station controller (BSC) **208** through a backhaul similar to backhaul **210.** The backhaul **210** can be implemented in a number of connection types including, e.g., a microwave or wire-line E1 or T1, or optical fiber. A connection **212** connects the wireless communication system **200** to a public switched data network (PSDN), which is not shown.

To receive data services in accordance with one embodiment of the invention, each MS monitors signal quality metrics of signals received from multiple BSs. An MS (for example MS **202**) receiving forward link signal from multiple BSs identifies the BS associated with the highest quality forward link signal (for example BS **204**). The MS **202** generates a prediction of a data rate at which a packet error rate (PER) of packets received from the identified **BS 204** will not exceed a target PER. An exemplary embodiment uses target PER of approximately 10%. An exemplary prediction method is disclosed in US Patent Number 6,426,971, Publication Number US 006426971 entitled "SYSTEM AND METHOD FOR ACCURATELY PREDICTING SIGNAL TO INTERFERENCE AND NOISE RATIO TO IMPROVE COMMUNICATIONS SYSTEM PERFORMANCE," assigned to the assignee of the present invention. The MS **202** then sends a message over the reverse link **206b,** requesting the actually selected rate. In one embodiment of the invention, the message is sent on a data rate control channel (DRC). The use of a DRC is disclosed in U.S. Patent Number 6,574,211. Publication Number US006574211 entitled: "METHOD AND APPARATUS FOR HIGH RATE PACKET DATA TRANSMISSION," assigned to the assignee of the present invention.

The BS **204** monitors the DRC from one or more MSs and selects a destination MS (for example MS **202**) based on a scheduling procedure designed to balance the grade of service (GoS) requirements of each MS with the desire to maximize throughput of the system **200.** In an exemplary embodiment, the BS **204** transmits data to the destination MS **202** on the forward link **206a** during forward link time slots dedicated to data services. The forward link structure is discussed in detail in reference to **FIG. 3.** In one embodiment, the BS **204** transmits data at the rate indicated by the most recent message received from the destination MS. This restriction makes it unnecessary for the destination MS 202 to perform rate detection on the forward link signal. The MS **202** need only determine whether it is the intended destination MS during a given time slot.

In an exemplary embodiment, BSs transmit a preamble within the first time slot of each new forward link packet. The preamble identifies the intended destination MS. Once a destination MS establishes that it is the intended destination for data in a slot, the MS begins decoding the data in the associated time slot. In an exemplary embodiment, the destination MS **202** determines the data rate of the data in the forward link based on the request message the MS **202** sent.

To receive voice services in accordance with one embodiment of the invention, each MS monitors forward link time slots dedicated to voice services, as discussed in detail in reference to **FIG. 3**. The voice services are provided in accordance with basic principles of CDMA as disclosed, e.g., in the IS-95 standard.

**FIG. 3** illustrates a forward link **300** of one embodiment of an HDR system in accordance with the present invention. The forward link **300** is defined in terms of frames **302**. (Only frames **302a, 302b, 302c** are shown in **FIG.1.**) In one embodiment, each frame **302** advantageously comprises 12 slots, each of length of 2048 chips or 1.66 ms duration. Consequently, duration of one frame is 20 ms, which is exactly the length of a voice frame in above referred IS-95 system. The frames **302** are then sub-channeled by assigning a group of time slots occupying a certain positions in the frames **302** to a particular sub-channel. In one embodiment, there are four sub-channels; the time slots marked **0** comprising 0$^{th}$ sub-channel, the time slots marked **1** comprising 1$^{st}$ sub-channel, etc. At least one sub-channel is then assigned to voice services and the remaining sub-channels are assigned to data services.

The data services transmit a packet over multiple forward link time slots for two reasons. First, the signal received in a single slot by destination MS contains components of noise and interference as well as the data signal transmitted by BS. By accumulating samples for a packet over multiple slots, destination MS takes advantage of the strong slot-to-slot correlation in the data signal compared to the weak slot-to-slot correlation in the interference and noise components. The samples accumulated over multiple slots eventually enable successful decoding of the packet. The success of decoding is evaluated based on a quality metric, e.g., a cyclical redundancy code (CRC), a parity bit, and other metric known to one skilled in the art. In one embodiment, the quality metric is a CRC. Second, the received signal will have greater time diversity. In a dynamic fading environment, a packet that is transmitted over a short period can easily be lost to a relatively transient fade in the signal. However, if a packet is transmitted over a period of time that is longer than the duration of a fade, then the signal received outside of the fade period can allow successful decoding of the packet. The longer the transmission period of a packet, the lower are the chances that a fade will block the entire packet signal. The number of forward link time slots used to transmit a packet varies based on a data rate at which the packet is sent. Packets sent at a lower rate are sent using a greater number of time slots. An exemplary set of data rates and associated number of forward link time slots is listed in Table 1.

Table 1. Forward Data Channel Modulation Parameters

| Data rate (kbps) | Bits/Packet | Slots/Packet |
|---|---|---|
| 38.4 | 1024 | 16 |
| 76.8 | 1024 | 8 |
| 102.4 | 1024 | 6 |
| 153.6 | 1024 | 4 |
| 204.8 | 1024 | 3 |
| 307.2 | 1024 | 2 |
| 614.4 | 1024 | 1 |
| 921.6 | 3072 | 2 |
| 1228.8 | 2048 | 1 |
| 1843.2 | 3072 | 1 |
| 2457.6 | 4096 | 1 |

In accordance with one embodiment, the multiple time slot packet is transmitted over one of the sub-channels assigned to the data services. For example, if sub-channels 1, 2, and 3 are assigned to the data services, and a sub-channel 1 is used for transmission of a multiple time slot packet, the packet will be transmitted in time slots marked 1.

The division of the frame 302 into sub-channels allows for integration with a Quick Automatic reQuest (QARQ) because it allows time for the QARQ to act before transmission to the same user takes place. The QARQ is disclosed in U.S. Patent Number 6,694,469, Publication Number US006694469 entitled "A METHOD AND AN APPARATUS FOR A QUICK RETRANSMISSION OF SIGNALS IN A COMMUNICATION SYSTEM" assigned to the assignee of the present application

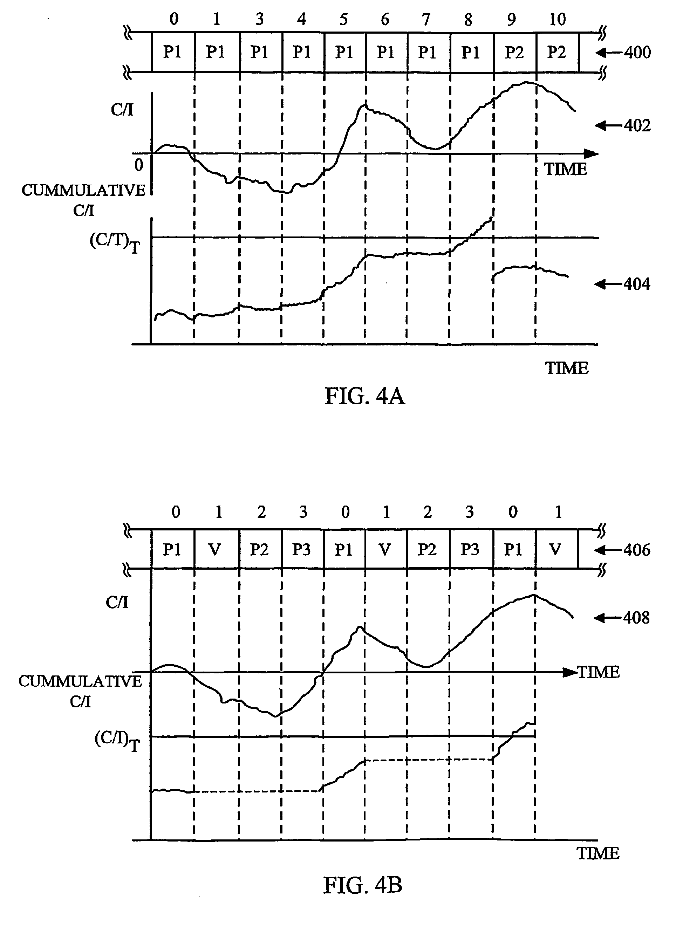

The division of the frame **302** into sub-channels also introduces time diversity, which affects an adaptive transmission control, disclosed in U.S. Patent Number 7,088,701, Publication Number US007088701 entitled "METHOD AND APPARATUS FOR ADAPTIVE TRANSMISSION CONTROL IN A HIGH DATA RATE COMMUNICATION SYSTEM" assigned to the assignee of the present application. As discussed, each forward link data rate is assigned a default number of time slots per packet. In accordance with the adaptive transmission control, if a MS successfully decodes a multiple-slot packet early (before it has received the default number of time slots), the MS stops a BS from sending the rest of the time slots for the packet. This concept is explained in detail in reference to **FIG. 4.**

**FIG. 4a** illustrates the adaptive transmission control concept for a case where a multiple slot packet is sent in consecutive time slots. At time slot 0 a BS starts transmitting a multi slot packet **P₁ over** the forward link **400.** The forward link condition characterized by a carrier-to-interference ratio (C/I) is shown in plot **402** as a function of time. The Packet received by MS is stored in an accumulation buffer. The MS then attempts to decode the contents of the accumulation buffer. Success of decoding is dependent on a cumulative C/I of the contents of the accumulation buffer. The relationship between the cumulative C/I and time is shown in plot **404.** The plot **404** indicates, that the accumulation buffer's cumulative C/I is below a carrier-to-interference threshold $(C/I)_T$ required for successful decoding. Consequently, an attempt to decode the packet fails. The packet **P₁** is retransmitted in subsequent time slots **1- 8,** and added to the contents of the accumulation buffer. In the time slot **8,** the accumulation buffer's cumulative C/I exceeds the $(C/I)_T$, and the packet is successfully decoded. The MS then sends a stop request, the BS stops transmitting packet P₁ and starts transmitting a new packet **P₂.**

**FIG. 4b** illustrates the adaptive transmission control concept for a case where a multiple slot packet is sent in sub-channels. At time slot **0** a BS starts transmitting a multi slot packet **P₁ over** the forward link **406.** The forward link condition is shown in plot **408,** and for the explanatory purposes is assumed the same as depicted in plot **402.** The packed received by MS is stored in an accumulation buffer. The MS then attempts to decode the contents of the accumulation buffer. Success of decoding is dependent on a cumulative C/I of the contents of the accumulation buffer. The relationship between the cumulative C/I and time is shown in plot **410.** The plot **410** indicates, that the accumulation buffer's cumulative C/I is below a carrier-to-interference threshold $(C/I)_T$ required for successful decoding. Consequently, an attempt to decode the packet fails. The packet **P₁** is retransmitted in $0^{th}$ sub-channel time slots, and added to the contents of the accumulation buffer. Because of the transmission time diversity, the C/I exhibits More correlation between the time slots of the $0^{th}$ sub-channel than between the consequent slots. Consequently, the accumulation buffer's cumulative C/I may exceed the $(C/I)_T$ with less transmissions.

In accordance with another embodiment, the multiple time slot packet is transmitted over all of the sub-channels assigned to the data services. For example, if sub-channels 1, 2, and 3 are assigned to the data services, the packet will be transmitted in time slots marked **1, 2, 3.**

The voice services are provided in accordance with the basic principles of CDMA as disclosed, e.g., in the IS-95 standard. As known to one skilled in the art, a voice packet in accordance with the IS-95 standard fills a frame with duration of 20 ms, and, for data rate of 9600 bps contains 192 bits. The IS-95 standard supports 64 code channels in such a frame. In accordance with one embodiment of the invention, the voice services are provided in at least one sub-channel, e.g., sub-channel 0, in the frame **302** in **FIG. 3.** Consequently, the voice services are provided in time slots marked **0.** Because in the embodiment depicted in **FIG. 3** there are three slots for voice services in the frame **302,** the number of supported

code channels is $\dfrac{3}{12} \cdot 64 = 16$, and each time slot car-

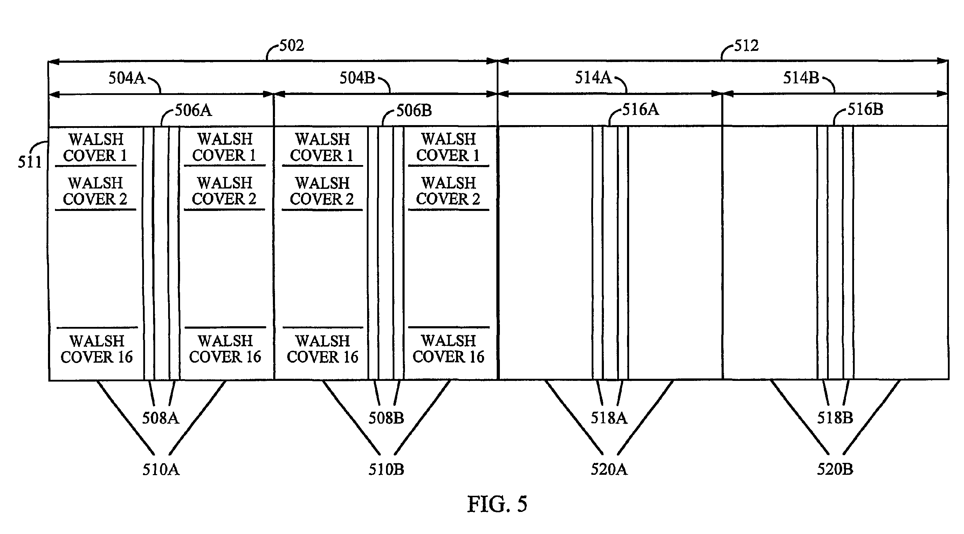

ries $\dfrac{192}{3} = 64$ bits. An embodiment of voice services slot and data services slot, e.g., slots **0** and **1** of **FIG. 3** is illustrated in **FIG. 5.** Each slot **502, 512** is divided into two half-slots **504a, 504b,** and 514a and 514b, with a pilot bursts **506a, 506b,** and **516a, 516b,** transmitted within each half-slot **504a, 504b,** and **514a, 514b** respectively. In an exemplary embodiment, each pilot burst **506a, 506b,** and **516a, 516b** is 96 chips long, and is centered at the mid-point of its associated half-slot **504a, 504b.** A forward medium access channel (MAC) **508a, 508b,** and **518a, 518b** is transmitted in every half-slot **504a, 504b,** and **514a, 514b.** Although the embodiment shows the MAC **508a, 508b,** and **518a, 518b** as being transmitted in every half-slot **504a, 504b,** and **514a, 514b,** one skilled in the art will appreciate that other embodiments may comprise different configuration of MACs in accordance with the principles of reverse power control described below. The MAC symbol Walsh covers are transmitted immediately before and immediately after each pilot burst **506a, 506b,** and **516a, 516b** of each slot **502, 512.** The forward link voice services payload is sent in the remaining portions of the first half-slot **510a** and the second half-slot **510b.** As explained, each voice services user is assigned one code channel. In one embodiment, the code channels are distinguished by Walsh covers **511,** in accordance with the IS-95 standard. The forward link data services payload is serial-concatenated coded in blocks of fixed size, called encoder packets. The encoder packets are sent in the payload portions of the first half-slot **520a** and the second half-slot **520b** of the data services slot **512.**

As known to one skilled in the art, a reverse power control signal in accordance with the IS-95 standard is transmitted on the forward traffic channel every 1.25 ms.

In accordance with an exemplary embodiment of the invention, a reverse power control signal uses an RPC of a HDR forward link channel as described in reference to **FIG.1.** As explained, the RPC can support 30 users. Consequently, in accordance with one embodiment, which sends the RPC signal to both the voice services users and the data users, the 30 RPCs are divided between the voice services users and the data services users.

In accordance with another embodiment, the RPC for both the voice services users and the data users is again sent in each time slot. To increase number of users, the RPC channel must be modified. In accordance with one modification, the MAC is increased to 63 code channels, which are orthogonally covered by 64-ary Walsh codes. Each code channel is identified by a MAC index, which has a value between 1 and 63, and identifies a unique 64-ary Walsh cover. The MAC symbol Walsh covers are repeated 2 times per time slot to form two bursts of length 64 chips each, which are transmitted immediately before and immediately after the second pilot burst of each slot. The RPC is assigned to one of the available MAC with MAC index greater than 1. A time slot in accordance with another modification is illustrated in **FIG. 6.** The time slot **604** is divided into two half-slots **604a, 604b,** with a pilot bursts **606a, 606b** transmitted within each half-slot **604a, 604b.** In an exemplary embodiment, each slot is 2048 chips long, corresponding to a 1.67 millisecond slot duration. In an exemplary embodiment, each pilot burst **606a, 606b** is 96 chips long, and is centered at the mid-point of its associated half-slot **604a, 604b.** A MAC **608a, 608b** is composed of 63 code channels, which are orthogonally covered by 64-ary Walsh codes. Each code channel is identified by a MAC index, which has a value between 1 and 63, and identifies a unique 64-ary Walsh cover. The MAC symbol Walsh covers for up to 31 users are repeated 2 times per time per half-slot **604a to** form two bursts of length 64 chips each, which are transmitted immediately before and immediately after pilot burst **606a.** The MAC symbol Walsh covers for the remaining users, up to 31, are repeated 2 times per time per half-slot **604b** to form two bursts of length 64 chips each, which are transmitted immediately before and immediately after pilot burst **606b.** The RPC is assigned to one of the available MAC with MAC index greater than 1. In an exemplary embodiment, forward link traffic channel data are sent in the remaining portions of the first half-slot **610a** and the remaining portions of the second half-slot **610b.** The payload of the traffic channel data is serial-concatenated coded in blocks of fixed size, called encoder packets. When a packet is a multi slot packet, a preamble **612** is sent in the first slot.

In accordance with another exemplary embodiment, the RPC for the voice services users is sent only in the voice services sub-channels, while a reverse power control signal for the data users is sent only in the data services sub-channels. This embodiment trades speed of power control for advantageous use of the RPC of a HDR forward link channel as described in reference to **FIG.1.**

In accordance with another exemplary embodiment, the RPC for certain users, is sent only in the voice services sub-channels, while a reverse power control signal for the remaining users is sent only in the data services sub-channels. This embodiment advantageously uses the RPC of a HDR forward link channel as described in reference to **FIG. 1.**

As known to one skilled in the art, a pilot signal in accordance with the IS-95 standard is transmitted continuously over the forward link. In accordance with one embodiment of the invention, the pilot signal bursts of the HDR forward link are advantageously utilized, consequently, there is no need for the IS-95 pilot signal.

As known to one skilled in the art, in the IS-95 system, a MS supports forward link power control by reporting a frame error rate statistics to the BS. As explained, BSs in an HDR system always transmit at full power. Therefore, forward power control is necessary only for the voice services. In accordance with one embodiment, the reverse link comprises any embodiment of a reverse link in accordance with IS-95 or IS-2000 standards. Consequently, the forward link power control is carried out in accordance with these standards. In another embodiment, when an existing HDR reverse link is used, the MS uses a medium access channel (MAC) of the reverse traffic channel to report a forward link quality metric. In one embodiment, the quality metric is a frame error rate. The MAC consists of DRC channel and a reverse rate indicator (RRI) channel. Because the DRC reports the requested forward traffic channel data rate when utilized by the user for data services, this function is unnecessary when the user utilizes voice services an may thus be used for reporting the frame error rate statistics.

Although the implementation of the voce services is described in reference to the IS-95 standard one skilled in the art will appreciate that other implementation of CDMA can be used. An example of another CDMA implementation is a proposal issued by the Telecommunications Industry Association entitled "'The cdma2000 ITU-R RTT Candidate Submission." The Telecommunications Industry Association is currently developing the cdma2000 proposal entitled ''Interim Standard TIA/EIA/IS-2000."

One skilled in the art will appreciate that the division of sub-channels as discussed in reference to **FIG. 3** is for explanation only. Thus, the frame 302 may be divided into more or less than four sub-channels. Furthermore, based on requirement for the data services and the voice services, the number of sub-channels assigned to each may vary. Thus, in an extreme case all sub-channels may be assigned to the data services or the voice services. Note, that when all of the sub-channels are assigned to the voice services, the number of supported code channels is 64, which is equivalent to the number of supported code channels in the IS-95 system.

**FIG. 7** illustrates a block diagram of basic subsystems of forward link hardware. Data source **702** contains data to be transmitted to the MSs via data services. The data are modulated in accordance with HDR principles and are provided to a multiplexer **706.** Data source **708a** contains data to be transmitted to a destination MS via voice services. The data is provided to a modulator **710a.** Within the modulator **710a,** the data are provided to an encoder **712a,** which block encodes the data, calculates a CRC, inserts a set of code tail bits, and convolutionally encodes the data. In the exemplary embodiment, the CRC generator and the convolutional encoder are specified by the IS-95 standard, although other quality metric and convolutional codes may be used. The convolutionally encoded data are provided to block interleaver **714a,** which reorders symbols on the encoded data. The interleaved data are provided to a long pseudonoise (PN) scrambler **716a,** which spreads the data with a long code, assigned to the destination MS. The long PN scrambling allows only the destination MS to descramble the data. The long PN spread data is provided to a Walsh code element **718,** which covers the data with a Walsh code, corresponding to a traffic channel assigned to the destination MS. The Walsh code covered data are provided to a short PN spreader **720a,** which spreads the data with a short PN in-phase code and a short PN quadrature code. The short PN spread data are provided to a multiplexer **706.** Although only one data source **708a** and modulator **710a** is shown, link in accordance with the principles of this invention up to 64 voice users can be accommodated. The multiplexer **706** then multiplexes the data services data and the voice services data on the forward link in accordance with the principles of this invention.

The previous description of the preferred embodiments is provided to enable any person skilled in the art to make or use the present invention. The various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope consistent with the claims disclosed herein.

**Claims**

1. A method for providing both voice services and data services in a High Data Rate CDMA wireless communication system (200) comprising the steps of:

   dividing each frame (320) of a forward link (300) of the High Data Rate CDMA wireless communication system (200) into a number of time slots, each time slot of each frame (302) having a specific position within said frame (302);
   forming at least one voice sub-channel to comprise at least one time slot that occupies the same specific position in each frame, the at least one voice sub-channel comprising a periodic subset of time slots within the forward link,
   providing voice service on at least one voice sub-channel of the one or more voice sub-channels; and providing data services on all remaining time slots.

2. The method of claim 1 further comprising forming at least one data sub-channel by assigning at least one of said remaining time slots in each frame to the or each data sub-channel, the at least one remaining time slot occupying a certain specific position in each frame.

3. The method of claim 2 further comprising providing data service on at least one data sub-channel of the one or more data sub-channels.

4. The method of claim 2 or claim 3 further comprising:

   associating a data service user with each of said data sub-channels, wherein each sub-channel carries data to a different data service user.

5. The method of any preceding claim wherein said step of providing voice service comprises the steps of:

   associating each voice service user with one of said one or more voice sub-channels;
   covering a data stream of said each voice service user with a different Walsh code; and
   inserting the covered data stream of said each voice service user into time slots of the voice sub-channel associated with said each voice service user.

6. The method of any of claims 1, 3, 4 or 5 wherein said step of providing data services comprises the step of inserting encoded packets of a data user into said time slots assigned to one of said data sub-channels, and each packet of the data user is retransmitted on the data sub-channel associated with the data user if the packet is not decoded by the mobile station (204) to which the packet is sent.

7. The method of any preceding claim wherein the number of sub-channels formed is variable.

8. An apparatus for providing services in a High Data Rate CDMA wireless communication system (200) comprising a data source (702) and a first modulator (704) communicatively connected to said data source (702), **characterised in that** the apparatus further comprises:

   a voice source (708);
   a second modulator (710) communicatively connected to said voice source (708); and
   a multiplexer (706) communicatively connected to said first modulator (704) and said second modulator (710), said multiplexer (706) being configured to:

   multiplex data from said second modulator (710) and said first modulator (704) on frames (302) of a forward link (300) of the High Data Rate wireless communication system (200), wherein each frame (302) of the forward link (300) has been divided into a number of time slots, each time slot of each frame (302) having a specific position within said frame (302);

place data from said first modulator (704) on a first sub-channel of the forward link (300), said first sub-channel comprising a periodic subset of multiple timeslots, each time slot occupying a certain specific position in each frame; and

place data from said second modulator (710) on a second sub-channel of the forward link (300), said second sub-channel comprising a periodic subset of multiple timeslots, each time slot occupying a certain specific position in each frame.

9. The apparatus of claim 8 wherein said second modulator (710) comprises a Walsh cover element (718), said Walsh cover element (718) being assigned a unique Walsh code.

10. The apparatus of claim 8 wherein said multiplexer (706) is configured to multiplex data from said first modulator (704) on a number of sub-channels utilizing all remaining time slots of said forward link (300), each of said number of sub-channels comprising a periodic sub-set of remaining time slots so that each data service user is associated with one of said number of sub-channels.

11. The apparatus of claim 8 wherein a number of sub-channels of the forward link (300) is variable.

**Patentansprüche**

1. Ein Verfahren zum Vorsehen von sowohl Sprachdiensten als auch Datendiensten in einem drahtlosen CDMA Kommunikationssystem (200) mit hoher Datenrate, wobei das Verfahren die folgenden Schritte aufweist:

Teilen jedes Rahmens (320) von einer Vorwärtsverbindung (300) von dem drahtlosen CDMA Kommunikationssystem (200) mit hoher Datenrate in eine Anzahl von Zeitschlitzen, wobei jeder Zeitschlitz von jedem Rahmen (302) eine spezielle Position innerhalb des Rahmens (302) besitzt;

Bilden von wenigstens einem Sprachsubkanal bzw. -unterkanal, um wenigstens einen Zeitschlitz aufzuweisen, der die gleiche spezielle Position in jedem Rahmen belegt, der wenigstens eine Sprachunterkanal einen periodischen Subsatz bzw. Untersatz von Zeitschlitzen innerhalb der Vorwärtsverbindung aufweist,

Vorsehen von Sprachdienst auf wenigstens einem Sprachunterkanal von dem einen oder den mehreren Sprachunterkanälen; und

Vorsehen von Datendiensten auf allen verbleibenden Zeitschlitzen.

2. Verfahren nach Anspruch 1, ferner aufweisend Bilden von wenigstens einem Daten-Unterkanal durch Zuweisen von wenigstens einem von den verbleibenden Zeitschlitzen in jedem Rahmen zu dem oder jedem Datenunterkanal, der wenigstens eine verbleibende Zeitschlitz eine bestimmte spezielle Position in jedem Rahmen belegt.

3. Verfahren nach Anspruch 2, ferner aufweisend, Vorsehen von Datendienst auf wenigstens einen Datenunterkanal von dem einen oder den mehreren Datenunterkanälen.

4. Verfahren nach Anspruch 2 oder Anspruch 3, ferner aufweisend:

Assoziieren eines Datendienstnutzers mit jedem von den Datenunterkanälen, wobei jeder Unterkanal Daten zu einem unterschiedlichen Datendienstnutzer befördert.

5. Verfahren nach irgendeinem vorhergehenden Anspruch, wobei der Schritt des Vorsehens von Sprachdienst die folgenden Schritte aufweist:

Assoziieren jedes Sprachdienstnutzers mit einem von dem einen oder den mehreren Sprachunterkanälen;

Abdecken bzw. Spreizen eines Datenstroms von besagten jedem Sprachdienstnutzer mit einem unterschiedlichen Walsh-Code; und

Einfügen des abgedeckten Datenstroms von besagten jedem Sprachdienstnutzer in Zeitschlitze von dem Sprachunterkanal, der mit besagten jedem Sprachdienstnutzer assoziiert ist.

6. Verfahren nach irgendeinem der Ansprüche 1, 3, 4 oder 5, wobei der Schritt des Vorsehens von Datendiensten den Schritt aufweist, des Einfügens von codierten Paketen von einem Datennutzer in die Zeitschlitze die einem von den Datenunterkanälen zugewiesen sind und jedes Paket von dem Datennutzer erneut übertragen wird, auf dem Datenunterkanal, der mit dem Datennutzer assoziiert ist, falls das Paket durch die Mobilstation (204) an die das Paket gesendet wurde, nicht decodiert worden ist.

7. Verfahren nach irgendeinem vorhergehenden Anspruch, wobei die Anzahl von gebildeten Unterkanälen variabel ist.

8. Eine Vorrichtung zum Vorsehen von Diensten in einem drahtlosen CDMA Kommunikationssystem (200) mit hoher Datenrate, eine Datenquelle (702) und einen ersten Modulator (704) aufweisend, der kommunikationsmäßig mit der Datenquelle (702) gekoppelt ist, **dadurch gekennzeichnet, dass** die Vorrichtung ferner Folgendes aufweist:

> eine Sprachquelle (708);
> einen zweiten Modulator (710), der kommunikationsmäßig mit der Sprachquelle (708) gekoppelt ist; und
> einen Multiplexer (706), der kommunikationsmäßig mit dem ersten Modulator (704) und dem zweiten Modulator (710) gekoppelt ist, wobei der Multiplexer (706) konfiguriert ist, zum:

>> Multiplexen von Daten von dem zweiten Modulator (710) und dem ersten Modulator (704) auf Rahmen (302) von einer Vorwärtsverbindung (300) von dem drahtlosen Kommunikationssystem (200) mit hoher Datenrate, wobei jeder Rahmen (302) von der Vorwärtsverbindung (300) in eine Anzahl von Zeitschlitzen geteilt worden ist, wobei jeder Zeitschlitz von jedem Rahmen (302) eine spezielle Position innerhalb des Rahmens besitzt;
>> Platzieren von Daten von dem ersten Modulator (704) auf einen ersten Sub- bzw. Unterkanal der Vorwärtsverbindung (300), wobei der erste Unterkanal einen periodischen Untersatz bzw. Subsatz von mehreren Zeitschlitzen aufweist, wobei jeder Zeitschlitz eine bestimmte spezielle Position in jedem Rahmen belegt; und
>> Platzieren von Daten von dem zweiten Modulator (710) auf einem zweiten Unterkanal von der Vorwärtsverbindung (300), wobei der zweite Unterkanal einen periodischen Subsatz von mehreren Zeitschlitzen aufweist, wobei jeder Zeitschlitz eine bestimmte spezielle Position in jedem Rahmen belegt.

9. Vorrichtung nach Anspruch 8, wobei der zweite Modulator (710) ein Walsh-Abdeckelement (= Walsh cover element) (718) aufweist, wobei dem Walsh-Abdeckelement (718) ein eindeutiger Walsh-Code zugewiesen worden ist.

10. Vorrichtung nach Anspruch 8, wobei der Multiplexer (706) konfiguriert ist zum Multiplexen von Daten von dem ersten Modulator (704) auf einer Anzahl von Unterkanälen unter Verwendung allen verbleibenden Zeitschlitzen von der Vorwärtsverbindung (300), wobei jeder von der Anzahl von Unterkanälen einen periodischen Subsatz von verbleibenden Zeitschlitzen aufweist, so dass jeder Datendienstnutzer mit einem von der Anzahl von Unterkanälen assoziiert ist.

11. Vorrichtung nach Anspruch 8, wobei eine Anzahl von Unterkanälen von der Vorwärtsverbindung (300) variabel ist.

## Revendications

1. Procédé pour fournir à la fois des services vocaux et des services de données dans un système de communication sans fil CDMA à haut débit de données (200), comprenant les étapes suivantes :

> diviser chaque trame (320) d'une liaison directe (300) du système de communication sans fil CDMA à haut débit de données (200) en un certain nombre de créneaux temporels, chaque créneau temporel de chaque trame (302) ayant une position particulière dans ladite trame (302) ;
> former au moins un sous-canal vocal comprenant au moins un créneau temporel qui occupe la même position particulière dans chaque trame, ledit au moins un sous-canal vocal comprenant un sous-ensemble périodique de créneaux temporels dans la liaison directe ;
> fournir un service vocal sur au moins un sous-canal vocal desdits un ou plusieurs sous-canaux vocaux ; et fournir des services de données sur tous les créneaux temporels restants.

2. Procédé selon la revendication 1, comprenant en outre la formation d'au moins un sous-canal de données en affectant au moins un des créneaux temporels restants dans chaque trame au sous-canal de données ou à chacun d'eux, ledit au moins un créneau temporel restant occupant une certaine position particulière dans chaque trame.

3. Procédé selon la revendication 2, comprenant en outre la fourniture d'un service de données sur au moins un sous-canal de données desdits un ou plusieurs sous-canaux de données.

4. Procédé selon la revendication 2, ou 3, comprenant en outre :

> associer un utilisateur de service de données à chacun des sous-canaux de données, chaque sous-canal transportant des données vers un utilisateur de services de données différent.

5. Procédé selon l'une quelconque des revendications précédentes, dans lequel l'étape de fourniture de service vocal comprend les étapes suivantes :

associer chaque utilisateur de service vocal à l'un desdits un ou plusieurs sous-canaux vocaux ;

couvrir un flux de données de chaque utilisateur de service vocal avec un code de Walsh différent ; et

insérer le flux de données couvert de chaque utilisateur de service vocal dans des créneaux temporels du sous-canal vocal associé à chaque utilisateur de service vocal.

6. Procédé selon l'une quelconque des revendications 1, 3, 4 ou 5, dans lequel l'étape de fourniture de services de données comprend une étape d'insertion de paquets codés d'un utilisateur de données dans les créneaux temporels affectés à l'un des sous-canaux de données, et chaque paquet de l'utilisateur de données est réémis sur le sous-canal de données associé à l'utilisateur de données si le paquet n'est pas décodé par le poste mobile (204) auquel le paquet est envoyé.

7. Procédé selon l'une quelconque des revendications précédentes, dans lequel le nombre de sous-canaux formés est variable.

8. Dispositif pour fournir des services dans un système de communication sans fil CDMA à haut débit de données (200) comprenant une source de données (702) et un premier modulateur (704) connecté en communication à ladite source de données (702), **caractérisé en ce que** le dispositif comprend en outre :

une source vocale (708) ;

un deuxième modulateur (710) connecté en communication à la source vocale (708) ; et

un multiplexeur (706) relié en communication au premier modulateur (704) et au deuxième modulateur (710), le multiplexeur (706) étant agencé pour :

multiplexer des données provenant du deuxième modulateur (710) et du premier modulateur (704) sur des trames (302) d'une liaison directe (300) du système de communication sans fil à haut débit de données (200), chaque trame (302) de la liaison directe (300) ayant été divisée en un certain nombre de créneaux temporels, chaque créneau temporel de chaque trame (302) ayant une position particulière dans la trame (302) ;

placer des données provenant du premier modulateur (704) sur un premier sous-canal de la liaison directe (300), le premier sous-canal comprenant un sous-ensemble périodique de plusieurs créneaux temporels, chaque créneau temporel occupant une certaine position particulière dans chaque trame ; et

placer des données provenant du deuxième modulateur (710) sur un deuxième sous-canal de la liaison directe (300), le deuxième sous-canal comprenant un sous-ensemble périodique de plusieurs créneaux temporels, chaque créneau temporel occupant une certaine position particulière dans chaque trame.

9. Dispositif selon la revendication 8, dans lequel le deuxième modulateur (710) comprend un élément de couverture de Walsh (718), l'élément de couverture de Walsh (718) étant affecté d'un code de Walsh spécifique.

10. Dispositif selon la revendication 8, dans lequel le multiplexeur (706) est agencé pour multiplexer des données provenant du premier modulateur (704) sur un certain nombre de sous-canaux en utilisant tous les créneaux temporels restants de la liaison directe (300), chacun dudit un certain nombre de sous-canaux comprenant un sous-ensemble périodique de créneaux temporels restants de sorte que chaque utilisateur de service de données est associé à l'un dudit un certain nombre de sous-canaux.

11. Dispositif selon la revendication 8, dans lequel un nombre de sous-canaux de la liaison directe (300) est variable.

(PRIOR ART)
FIG. 1

FIG. 3

FIG. 6

FIG. 2

- 200
- 204 AT
- 206A FORWARD LINK
- 206B REVERSE LINK
- 202 AP
- 210 BACK-HAUL
- 208 BSC
- 212

FIG. 7

- 706 MUX
- 702 DATA SOURCE
- 704 MODULATOR
- 708 DATA SOURCE
- 710
- 712 ENCODER
- 714 BLOCK INTERLEAVER
- 716 LONG PN SCRAMBLER
- 718 WALSH COVER ELEMENT — $W_j$
- 720 SHORT PN SPREADER — DELAYED $PN_I$, $PN_Q$

FIG. 4A

FIG. 4B

EP 1 281 249 B1

502 512

504A 504B 514A 514B

506A 506B 516A 516B

511

| WALSH COVER 1 | | WALSH COVER 1 | WALSH COVER 1 | | WALSH COVER 1 |
| WALSH COVER 2 | | WALSH COVER 2 | WALSH COVER 2 | | WALSH COVER 2 |
| WALSH COVER 16 | | WALSH COVER 16 | WALSH COVER 16 | | WALSH COVER 16 |

508A 508B 518A 518B

510A 510B 520A 520B

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0538546 A
- US 4901307 A
- US 5103459 A
- US 005103459 A
- US 5504773 A
- US 005504773 A
- US 5101501 A
- US 005101501 A

- US 6426971 B
- US 006426971 B
- US 6574211 B
- US 006574211 B
- US 6694469 B
- US 006694469 B
- US 7088701 B
- US 007088701 B